(19) Europäisches Patentamt
European Patent Office
Office européen des brevets

(11) **EP 2 943 841 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **14702479.8**

(22) Anmeldetag: **22.01.2014**

(51) Int Cl.:
**G05B 13/02** *(2006.01)*

(86) Internationale Anmeldenummer:
**PCT/EP2014/051187**

(87) Internationale Veröffentlichungsnummer:
**WO 2014/154375 (02.10.2014 Gazette 2014/40)**

(54) **VERFAHREN ZUR RECHNERGESTÜTZTEN STEUERUNG UND/ODER REGELUNG EINES TECHNISCHEN SYSTEMS**

METHOD FOR THE COMPUTERIZED CONTROL AND/OR REGULATION OF A TECHNICAL SYSTEM

PROCÉDÉ DE COMMANDE ET/OU DE RÉGULATION, ASSISTÉE PAR ORDINATEUR, D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2013 DE 102013205328**

(43) Veröffentlichungstag der Anmeldung:
**18.11.2015 Patentblatt 2015/47**

(73) Patentinhaber: **Siemens Aktiengesellschaft
80333 München (DE)**

(72) Erfinder:
• **DÜLL, Siegmund
80336 München (DE)**
• **HENTSCHEL, Alexander
81929 München (DE)**
• **UDLUFT, Steffen
82223 Eichenau (DE)**

(56) Entgegenhaltungen:
**DE-B3-102007 042 440    US-A1- 2009 099 985**

• **LUCIAN BUSONIU ET AL: "Approximate reinforcement learning: An overview", ADAPTIVE DYNAMIC PROGRAMMING AND REINFORCEMENT LEARNING (ADPRL), 2011 IEEE SYMPOSIUM ON, IEEE, 11. April 2011 (2011-04-11), Seiten 1-8, XP031907569, DOI: 10.1109/ADPRL.2011.5967353 ISBN: 978-1-4244-9887-1 in der Anmeldung erwähnt**
• **DANIEL SCHNEEGAß ET AL: "Improving Optimality of Neural Rewards Regression for Data-Efficient Batch Near-Optimal Policy Identification", 9. September 2007 (2007-09-09), ARTIFICIAL NEURAL NETWORKS Â ICANN 2007; [LECTURE NOTES IN COMPUTER SCIENCE], SPRINGER BERLIN HEIDELBERG, BERLIN, HEIDELBERG, PAGE(S) 109 - 118, XP019069348, ISBN: 978-3-540-74689-8 das ganze Dokument**

EP 2 943 841 B1

**Beschreibung**

Die Erfindung betrifft ein Verfahren zur rechnergestützten Steuerung und/oder Regelung eines technischen Systems sowie ein entsprechendes Computerprogrammprodukt.

Komplexe technische Systeme, wie z.B. Gasturbinen oder Windturbinen, werden oftmals basierend auf rechnergestützten Verfahren geregelt, welche basierend auf Trainingsdaten und entsprechenden Optimalitätskriterien eine Aktionsauswahlregel (englisch: Policy) festlegen. Diese Aktionsauswahlregel gibt an, welche Aktion am technischen System in einem entsprechenden Zustand des Systems durchzuführen ist. Hierdurch kann z.B. ein Betrieb des technischen Systems mit einem hohen Wirkungsgrad erreicht werden. Für Gasturbinen können ferner gegebenenfalls die Brennkammerdynamik bzw. die Emissionen reduziert werden. Bei Windturbinen kann z.B. auch die Ausrichtung der Gondel in Bezug auf den Wind optimiert werden.

Zur Bestimmung entsprechender Aktionsauswahlregeln für technische Systeme werden meist aufwändige Regressions-Verfahren, wie z.B. neuronale Netze, verwendet. Diese weisen jedoch den Nachteil auf, dass sie komplexe Aktionsauswahlregeln generieren, die durch menschliche Experten nicht mehr interpretiert bzw. verstanden werden können. Demzufolge werden komplexe Aktionsauswahlregeln mangels Verständlichkeit zuweilen nicht im Betrieb eines technischen Systems verwendet. Aus dem Stand der Technik sind Verfahren bekannt, mit denen Aktionsauswahlregeln mit geringerer Komplexität generiert werden, z.B. indem das technische System durch Zustände mit niedriger Dimension repräsentiert wird oder einfachere Regressions-Verfahren verwendet werden. Diese Ansätze führen jedoch häufig zu einer Aktionsauswahlregel, welche für die Steuerung bzw. Regelung des technischen Systems nicht optimal ist.

Die Druckschrift US 2009/099985 A1 offenbart ein Verfahren zum belohnungsbasierten Lernen von Aktionsauswahlregeln zur Steuerung eines technischen Systems. Im Rahmen des Verfahrens wird eine Distanzmetrik zwischen Zustands-Aktions-Paaren des technischen Systems sowie ein Funktionsapproximator trainiert, um hieraus die Aktionsauswahlregel abzuleiten.

Das Dokument DE 10 2007 042 440 B3 offenbart ein Verfahren zur rechnergestützten Steuerung und/oder Regelung eines technischen Systems, bei dem eine Aktionsauswahlregel über ein bestärkendes Lernverfahren mittels verknüpfter Feed-Forward-Netze erlernt wird.

Die Druckschrift Busoniu, L. et al.: "Approximate Reinforcement Learning: An Overview, Adaptive Dynamic Programming and Reinforcement Learning (ADPRL)", 2011 IEEE Symposium On, IEEE, 11. April 2011, Seiten 1 bis 8 gibt einen Überblick über bestärkende Lernverfahren zum Ermitteln von Aktionsauswahlregeln mit Hilfe einer Belohnungsfunktion.

Aufgabe der Erfindung ist es deshalb, ein Verfahren zur rechnergestützten Steuerung und/oder Regelung eines technischen Systems zu schaffen, welches eine gut für das technische System geeignete Aktionsauswahlregel mit geringer Komplexität verwendet.

Diese Aufgabe wird durch die unabhängigen Patentansprüche gelöst. Weiterbildungen der Erfindung sind in den abhängigen Ansprüchen definiert.

Das erfindungsgemäße Verfahren wird nachfolgend basierend auf den Schritten a) bis c) erläutert. Die Bezeichnung dieser Schritte dient nur zur besseren Referenzierung der darin enthaltenen Merkmale und legt keine Reihenfolge der Ausführung fest. Insbesondere können bestimmte Schritte auch parallel durchgeführt werden bzw. ineinander verwoben werden.

Das erfindungsgemäße Verfahren dient zur rechnergestützten Steuerung bzw. Regelung eines technischen Systems. Gemäß Schritt a) wird das dynamische Verhalten des technischen Systems für mehrere Zeitpunkte jeweils durch einen Zustand des technischen Systems und eine am technischen System durchgeführte Aktion charakterisiert, wobei eine jeweilige Aktion zu einem jeweiligen Zeitpunkt in einen neuen Zustand des technischen Systems zum nächsten Zeitpunkt führt. Der Begriff des Zustands bzw. der Aktion ist dabei weit zu verstehen. Ein Zustand kann insbesondere einen Zustandsvektor mit einer oder mehreren Zustandsvariablen umfassen. Ein Zustand zum jeweiligen (aktuellen) Zeitpunkt kann optional neben einem Zustandsvektor zum aktuellen Zeitpunkt auch einen oder mehrere Zustandsvektoren zu einem oder mehreren vorhergehenden Zeitpunkten umfassen, wodurch die Historie des Zustands über einen beschränkten Zeithorizont berücksichtigt wird. Ebenso kann eine Aktion einen Vektor aus mehreren Aktionsvariablen darstellen.

In einem Schritt b) des erfindungsgemäßen Verfahrens werden (mehrere) Aktionsauswahlregeln bereitgestellt und/oder erzeugt, wobei eine jeweilige Aktionsauswahlregel eine zu einem entsprechenden Zeitpunkt am technischen System auszuführende Aktion in Abhängigkeit von zumindest dem Zustand des technischen Systems zum entsprechenden Zeitpunkt angibt und wobei jeder Aktionsauswahlregel ein Komplexitätsmaß zugeordnet ist, das eine Komplexität der jeweiligen Aktionsauswahlregel beschreibt, welche kleiner oder kleiner gleich einer vorbestimmten Komplexitätsschwelle ist. Das Komplexitätsmaß kann dabei auf verschiedene Weise definiert sein, wobei weiter unten Beispiele solcher Komplexitätsmaße gegeben werden.

In einem Schritt c) des erfindungsgemäßen Verfahrens wird aus den bereitgestellten und/oder erzeugten Aktionsauswahlregeln mittels der Berechnung von Bewertungsmaßen, welche jeweils die Eignung einer Aktionsauswahlregel zur Regelung und/oder Steuerung des technischen Systems beschreiben, die Aktionsauswahlregel mit dem höchsten Bewertungsmaß der bereitgestellten und/oder erzeugten Aktionsauswahlregeln ermittelt. Ein höheres Bewertungsmaß beschreibt dabei eine bessere Eignung der Aktionsauswahlregel zur Regelung und/oder Steuerung des technischen Systems. In bestimmten Ausführungsformen können die Schritte b) und c) parallel bzw. ineinander verwoben durchgeführt werden. Zum Beispiel können zunächst bestimmte Aktionsauswahlregeln erzeugt werden und anschließend ein Teil der Aktionsauswahlregeln mit schlechten Bewertungsmaßen verworfen werden. Anschließend werden wiederum neue Aktionsauswahlregeln erzeugt und in gleicher Weise wieder entsprechende Aktionsauswahlregeln verworfen. Insbesondere bei der Verwendung der weiter unten beschriebenen genetischen Programmierung bzw. einer Particle-Swarm-Optimierung sind die Schritte b) und c) ineinander verwoben.

Das im Rahmen von Schritt c) berechnete Bewertungsmaß einer jeweiligen Aktionsauswahlregel kann erfindungsgemäß von einer oder mehreren der folgenden drei Größen abhängen:

- einem Distanzmaß zwischen der jeweiligen Aktionsauswahlregel und einer vorgegebenen optimalen Aktionsauswahlregel, wobei abnehmende Distanzmaße höhere Bewertungsmaße repräsentieren und wobei die vorgegebene optimale Aktionsauswahlregel vorzugsweise auf einem neuronalen Netz (z.B. einem rekurrenten neuronalen Netz) basiert;

- einem Belohnungsmaß, welches sich bei der Ausführung der jeweiligen Aktionsauswahlregel in einer Simulation des technischen Systems ergibt, wobei höhere Belohnungsmaße zu höheren Bewertungsmaßen führen und wobei die Simulation vorzugsweise auf einem neuronalen Netz (z.B. einem rekurrenten neuronalen Netz) basiert;

- einem Gütemaß für die jeweilige Aktionsauswahlregel, welches mittels einer Aktionsauswahlregel-Evaluations-Methode (englisch: Policy Evaluation Method) bestimmt wird, wobei höhere Gütemaße zu höheren Bewertungsmaßen führen.

Das oben beschriebene Belohnungsmaß ist in Abhängigkeit von vorbestimmten Optimalitätskriterien des Betriebs des technischen Systems festgelegt, wobei ein höheres Belohnungsmaß eine bessere Steuerung bzw. Regelung des technischen Systems im Hinblick auf die Optimalitätskriterien festlegt. Die Bestimmung eines Gütemaßes basierend auf einer Aktionsauswahlregel-Evaluations-Methode ist an sich aus dem Stand der Technik bekannt. Insbesondere sind verschiedene Arten von Aktionsauswahlregel-Evaluations-Methoden bekannt. In einer bevorzugten Ausführungsform wird eine "Fitted Policy Evaluation Method" verwendet (siehe Dokument [1]).

Nach Bestimmung der Aktionsauswahlregel in Schritt c) wird das technische System schließlich mit dieser Aktionsauswahlregel in Schritt d) geregelt und/oder gesteuert.

Das erfindungsgemäße Verfahren ermöglicht die Regelung bzw. Steuerung eines technischen Systems mit einer Aktionsauswahlregel mit geringer Komplexität, welche durch die Festlegung eines geeigneten Bewertungsmaßes weiterhin einen möglichst optimalen Betrieb des technischen Systems gewährleistet. Durch die Verminderung der Komplexität der Aktionsauswahlregel ist diese leichter durch einen Menschen verstehbar, so dass die rechnergestützte Steuerung bzw. Regelung des technischen Systems mit dieser Aktionsauswahlregel eher akzeptiert wird.

In einer besonders bevorzugten Ausführungsform werden die bereitgestellten bzw. erzeugten Aktionsauswahlregeln jeweils durch einen funktionalen Zusammenhang repräsentiert, der basierend auf zumindest dem Zustand des technischen Systems zum jeweiligen Zeitpunkt die zum jeweiligen Zeitpunkt auszuführende Aktion liefert. Der Begriff des funktionalen Zusammenhangs ist dabei weit zu verstehen und kann jede beliebige Art von Funktion bzw. Funktionenzusammensetzung bzw. mathematischem Ausdruck umfassen. Insbesondere kann der funktionale Zusammenhang einstellbare Parameter umfassen, wobei durch die Festlegung entsprechender Parameterwerte eine Aktionsauswahlregel definiert wird.

Das im erfindungsgemäßen Verfahren verwendete Komplexitätsmaß kann auf verschiedene Art und Weise definiert sein. Verschiedene Verfahren zur Bestimmung von Komplexitätsmaßen sind dabei aus dem Stand der Technik bekannt (siehe z.B. Dokument [2]). In einer besonders bevorzugten Ausführungsform wird das Komplexitätsmaß durch eine Beschreibungslänge des funktionalen Zusammenhangs repräsentiert, wobei die Komplexität gemäß dem Komplexitätsmaß umso geringer ist, je geringer die Beschreibungslänge ist. Die Beschreibungslänge umfasst in einer besonders bevorzugten Ausführungsform die Länge einer binären oder ASCII-Repräsentation des funktionalen Zusammenhangs und/oder die Anzahl an Knoten in dem durch den funktionalen Zusammenhang repräsentieren Parsebaum und/oder die Anzahl von einstellbaren Parametern des funktionalen Zusammenhangs. Dabei ist die Komplexität gemäß dem Komplexitätsmaß umso geringer, je geringer die Länge der binären oder ASCII-Repräsentation des funktionalen Zusammenhangs ist bzw. je geringer die Anzahl der Knoten im Parsebaum ist bzw. je geringer die Anzahl der einstellbaren Parameter ist. Die Länge der binären bzw. ASCII-Repräsentation wird dabei durch die Länge des entsprechenden binären Codes bzw. ASCII-Codes repräsentiert. Die Erstellung eines Parsebaums aus einem funktionalen Zusammenhang ist an sich aus dem Stand der Technik bekannt und wird deshalb nicht näher erläutert.

In einer weiteren Variante des erfindungsgemäßen Verfahrens beruhen die in Schritt b) bereitgestellten Aktionsauswahlregeln auf Expertenwissen. Das heißt, die Aktionsauswahlregeln sind durch Experten vorgegeben. Diese Aktionsauswahlregeln sind in einem Speicher hinterlegt und werden in Schritt b) des Verfahrens ausgelesen.

In einer weiteren, besonders bevorzugten Variante des erfindungsgemäßen Verfahrens werden die Schritte b) und c) mittels genetischer Programmierung und/oder basierend auf einer Particle-Swarm-Optimierung durchgeführt. Bei diesen Methoden werden schrittweise neue Aktionsauswahlregeln erzeugt und zu einer Population hinzugefügt, wobei Aktionsauswahlregeln mit einem schlechten Bewertungsmaß wieder aus der Population verworfen werden. Verfahren zur genetischen Programmierung bzw. Particle-Swarm-Optimierungen sind hinlänglich aus dem Stand der Technik bekannt und werden deshalb nicht weiter im Detail beschrieben.

In einer weiteren Ausgestaltung des erfindungsgemäßen Verfahrens erfolgt die Erzeugung der Aktionsauswahlregeln in Schritt b) derart, dass die Aktionsauswahlregeln aus einer vorbestimmten optimalen Aktionsauswahlregel abgeleitet werden. Die vorbestimmte optimale Aktionsauswahlregel kann dabei der vorgegebenen optimalen Aktionsauswahlregel aus Schritt c) des erfindungsgemäßen Verfahrens entsprechen. Die vorbestimmte optimale Aktionsauswahlregel weist in der Regel ein Komplexitätsmaß auf, dessen Komplexität wesentlich höher als die vorbestimmte Komplexitätsschwelle ist. Das Ableiten der Aktionsauswahlregeln erfolgt vorzugsweise durch eine Approximation der vorbestimmten optimalen Aktionsauswahlregel mittels eines funktionalen Zusammenhangs, der ein Komplexitätsmaß mit einer Komplexität repräsentiert, die kleiner oder kleiner gleich der vorbestimmten Komplexitätsschwelle ist.

In einer weiteren Variante des erfindungsgemäßen Verfahrens wird das Distanzmaß in Schritt c) derart bestimmt, dass aus der vorgegebenen optimalen Aktionsauswahlregel eine oder mehrere Aktionen und aus der jeweiligen Aktionsauswahlregel eine oder mehrere Aktionen generiert werden und die Abweichung zwischen der oder den Aktionen, die aus der optimalen Aktionsauswahlregel generiert sind, und der oder den Aktionen, die aus der jeweiligen Aktionsauswahlregel generiert sind, bestimmt wird. Eine größere Abweichung repräsentiert dabei ein größeres Distanzmaß und damit ein niedrigeres Bewertungsmaß. Die Abweichung kann z.B. eine quadratische Abweichung sein.

Das erfindungsgemäße Verfahren eignet sich insbesondere zur Regelung bzw. Steuerung eines technischen Systems in der Form einer Gasturbine und/oder Windturbine.

Im Falle einer Gasturbine umfassen die Zustände der Gasturbine vorzugsweise eine oder mehrere der folgenden Größen:

- die Temperatur und/oder den Druck an einer oder mehreren Stellen an der Gasturbine, insbesondere die Umgebungstemperatur und/oder den Umgebungsdruck und/oder die Kompressortemperatur und/oder den Kompressordruck und/oder die Temperatur in der Brennkammer und/oder den Druck in der Brennkammer;
- die Luftfeuchtigkeit an einer oder mehreren Stellen an der Gasturbine;
- Brennkammerbeschleunigungen in der Gasturbine;
- die Schadstoffemission der Gasturbine, insbesondere die Stickoxid-Emission;
- die durch die Gasturbine erzeugte Leistung.

Demgegenüber umfassen die an der Gasturbine auszuführenden Aktionen vorzugsweise eine Veränderung der Einstellung von einem oder mehreren Kraftstoff-Einspritzventilen und/oder eine Veränderung der Position von einer oder mehreren Schaufeln der Gasturbine, wie z.B. der Vorleitschaufeln.

Im Falle, dass das technische System eine Windturbine ist, umfassen die Zustände der Windturbine vorzugsweise eine oder mehrere der folgenden Größen:

- die Temperatur und/oder den Druck und/oder die Luftfeuchtigkeit an einer oder mehreren Stellen an der Windturbine, insbesondere die Umgebungstemperatur und/oder den Umgebungsdruck und/oder die Umgebungsluftfeuchtigkeit;
- die Windstärke an der Windturbine;
- die durch die Windturbine erzeugte Leistung.

Demgegenüber umfassen die an der Windturbine auszuführenden Aktionen vorzugsweise eine Veränderung der Anstellwinkel der Rotorblätter des Rotors der Windturbine und/oder eine Veränderung der Ausrichtung des Rotors der Windturbine zum Wind.

Neben dem oben beschriebenen Verfahren betrifft die Erfindung ferner ein Computerprogrammprodukt mit einem auf einem maschinenlesbaren Träger gespeicherten Programm zur Durchführung des erfindungsgemäßen Verfahrens bzw. einer oder mehrerer bevorzugter Varianten des erfindungsgemäßen Verfahrens, wenn das Programm auf einem Rechner abläuft.

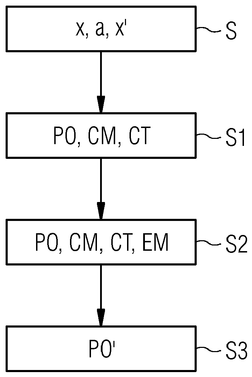

Ein Ausführungsbeispiel der Erfindung wird nachfolgend anhand der beigefügten Fig. 1 beschrieben. Diese Figur zeigt in schematischer Darstellung den Ablauf einer Variante des erfindungsgemäßen Verfahrens.

Die im Folgenden beschriebene Ausführungsform ermöglicht die Bestimmung einer Aktionsauswahlregel zur Steuerung bzw. Regelung eines technischen Systems, welche eine niedrige Komplexität aufweist und somit durch den Bediener des technischen Systems bzw. einen menschlichen Experten verstanden werden kann. Die Aktionsauswahlregel weist ferner ein hohes Bewertungsmaß auf, welches die Eignung einer Aktionsauswahlregel zur Regelung bzw.

Steuerung des technischen Systems repräsentiert. Wie bereits im Vorangegangenen beschrieben, eignet sich das Verfahren insbesondere zur Regelung und/oder Steuerung einer Gasturbine bzw. einer Windturbine.

Der mit Bezugszeichen S (S = Start) bezeichnete Ausgangspunkt des Verfahrens der Fig. 1 ist eine Charakterisierung des dynamischen Verhaltens des zu regelnden bzw. steuernden technischen Systems über einen Zustand x zu einem entsprechenden Zeitpunkt sowie einer zu diesem Zeitpunkt durchgeführten Aktion a, die zu einem Folgezustand x' führt. Der Zustand kann dabei ein Zustandsvektor mit einer Vielzahl von Zustandsvariablen sein. Ebenso kann eine Aktion durch einen Vektor mit mehreren Aktionsvariablen repräsentiert sein.

In einem Schritt S1 des Verfahrens der Fig. 1 wird eine Vielzahl von Aktionsauswahlregeln PO bereitgestellt, denen jeweils ein Komplexitätsmaß CM zugeordnet ist, das unterhalb einer vorgegebenen Komplexitätsschwelle CT liegt. In der hier beschriebenen Variante sind die Aktionsauswahlregeln durch einen Experten vorgegeben und werden dabei durch eine Funktion mit einer vorbestimmten Anzahl von freien (d.h. einstellbaren) Parametern repräsentiert, wobei die Anzahl von Parametern das Komplexitätsmaß CM bestimmt. Die Anzahl der freien Parameter wurde dabei derart klein gewählt, dass sich hieraus ein Komplexitätsmaß ergibt, das unterhalb der Komplexitätsschwelle CT liegt.

Aus den bereitgestellten Aktionsauswahlregeln des Schritts S1 werden schließlich in einem Schritt S2 weitere Aktionsauswahlregeln PO mittels einer Particle-Swarm-Optimierung (abgegürzt PSO) generiert. Dabei werden neue Aktionsauswahlregeln durch Veränderung der freien Parameter erzeugt, die zu der Population der Aktionsauswahlregeln hinzugefügt werden. Die neuen Aktionsauswahlregeln werden anschließend basierend auf einem Bewertungsmaß EM bewertet. Ein höheres Bewertungsmaß repräsentiert dabei eine bessere Eignung einer Aktionsauswahlregel zur Regelung bzw. Steuerung des technischen Systems. Da nur die freien Parameter in der durch den Experten vorgegebenen Aktionsauswahlregel optimiert werden, wird sichergestellt, dass alle neuen Aktionsauswahlregeln ein Komplexitätsmaß CM aufweisen, das unterhalb der Komplexitätsschwelle CT liegt. Im Rahmen der Particle-Swarm-Optimierung werden schrittweise Aktionsauswahlregeln mit geringen Bewertungsmaßen verworfen und immer wieder neue Aktionsauswahlregeln zu der Population hinzugefügt, bis schließlich basierend auf einem Abbruchkriterium diejenige Aktionsauswahlregel PO' aus der Population bestimmt wird, welche das höchste Bewertungsmaß aufweist.

Die soeben erläuterten Schritte S1 und S2 können wie folgt zusammengefasst werden:

- Ein Experte bestimmt eine Aktionsauswahlregel (Funktion) mit freien Parametern.
  Beispiel: x ist Zustandsvariable des Systems. Der Experte denkt, dass eine optimale Aktionsauswahlregel (a ist Aktion) durch folgende Formel beschrieben ist:

$$a = \sin(k \ast x) - g \ast x^2$$

  wobei k, g freie Parameter sind

- PSO sucht basierend auf den Bewertungsmaßen nach besten (numerischen) Werten für diese freien Parameter.
  Beispiel: PSO findet k = 2,704 und g = -0,629 als optimal.
- Die Aktionsauswahlregel mit den vom PSO als optimal befundenen Parameter-Werten wird zur Aktionsauswahlregel PO' (für obiges Beispiel also a = $\sin(2{,}704 \ast x) + 0{,}629 \ast x^2$).

Die ermittelte Aktionsauswahlregel PO' wird schließlich in einem Schritt S3 zur Regelung bzw. Steuerung des technischen Systems genutzt. Das heißt, basierend auf dem aktuellen Zustand und gegebenenfalls zusätzlicher vergangener Zustände des technischen Systems wird mittels der Aktionsauswahlregel PO' die Aktion bestimmt, die zum aktuellen Zeitpunkt am technischen System ausgeführt wird.

Das Bewertungsmaß EM, das in Schritt S2 berechnet wird, kann auf verschiedene Art und Weise ermittelt werden. In einer Variante stellt das Bewertungsmaß das oben beschriebene Distanzmaß zwischen einer jeweiligen Aktionsauswahlregel und einer vorgegebenen optimalen Aktionsauswahlregel dar. Ebenso kann das Bewertungsmaß das oben beschriebene Belohnungsmaß bzw. das oben beschriebene Gütemaß darstellen bzw. Kombinationen aus dem Distanzmaß, dem Belohnungsmaß und dem Gütemaß. Anstatt einer Particle-Swarm-Optimierung können in Schritt S2 des oben beschriebenen Verfahrens auch andere Methoden zur Ermittlung der Aktionsauswahlregel PO' herangezogen werden. Zum Beispiel kann eine an sich bekannte Genetische Programmierung verwendet werden.

Im Folgenden wird eine Variante der Schritte S1 und S2 für die Ermittlung einer Aktionsauswahlregel mittels einer genetischen Programmierung erläutert.

In Schritt S1 werden funktionale Bausteine, z.B. sin(x), exp(x), durch einen Experten vorgegeben, wobei x den Zustand des technischen Systems mit entsprechenden Zustandsvariablen repräsentiert. Durch zufälliges Zusammenfügen der funktionalen Bausteine zu gültigen mathematischen Formeln basierend auf den Zustandsvariablen werden initiale Aktionsauswahlregeln PO generiert. Der Generierungsprozess garantiert dabei, dass nur Aktionsauswahlregeln erzeugt werden, deren Komplexitätsmaß die Komplexitätsschwelle CT nicht überschreiten. Aus den bereitgestellten Aktionsauswahlregeln des Schritts S1 werden schließlich in einem Schritt S2 weitere Aktionsauswahlregeln PO mittels der genetischen Programmierung bestimmt. Dabei werden neue Aktionsauswahlregeln erzeugt, die zu der Population der Aktionsauswahlregeln hinzugefügt werden. Die neuen Aktionsauswahlregeln werden anschließend basierend auf einem Bewertungsmaß EM bewertet. Ein höheres Bewertungsmaß repräsentiert dabei eine bessere Eignung einer Aktionsauswahlregel zur Regelung bzw. Steuerung des technischen Systems. Durch die genetische Programmierung wird sichergestellt, dass alle neuen Aktionsauswahlregeln ein Komplexitätsmaß CM aufweisen, das unterhalb der Komplexitätsschwelle CT liegt. Im Rahmen der genetischen Programmierung werden schrittweise Aktionsauswahlregeln mit geringen Bewertungsmaßen verworfen und immer wieder neue Aktionsauswahlregeln zu der Population hinzugefügt, bis schließlich basierend auf einem Abbruchkriterium diejenige Aktionsauswahlregel PO' aus der Population bestimmt wird, welche das höchste Bewertungsmaß aufweist.

Die soeben erläuterten Schritte S1 und S2 können wie folgt zusammengefasst werden:

- Ein Experte bestimmt funktionale Bausteine für Aktionsauswahlregeln mit freien Parametern.
  Beispiel: Der Experte definiert, dass in einer Aktionsauswahlregel für die Aktion a folgende mathematische Bausteine verwendet werden dürfen:

  Multiplikation, Addition, Subtraktion,
  Sinus, Cosinus,
  Zustandsvariable x,
  numerische Konstanten (d.h. beliebige festen Zahlen).

- Die Genetische Programmierung versucht, aus den mathematischen Bausteinen Formeln für Aktionsauswahlregeln zusammenzusetzen, die ein möglichst hohes Bewertungsmaß haben und das vorgegebene Komplexitätsmaß nicht überschreiten.
  Beispiel: Die Genetische Programmierung ermittelt, dass die folgende Aktionsauswahlregel am besten ist:

$$a = \sin(2{,}704 * x) + 0{,}629 * x * x.$$

- Diese Aktionsauswahlregel wird dann zur Aktionsauswahlregel PO'.

Die im Vorangegangenen beschriebene Ausführungsform der Erfindung weist eine Reihe von Vorteilen auf. Insbesondere wird eine Regelung bzw. Steuerung eines technischen Systems mit einer Aktionsauswahlregel mit geringer Komplexität erreicht. Die Aktionsauswahlregel ist somit durch den Bediener des technischen Systems bzw. einen menschlichen Experten verstehbar und führt zu einer höheren Akzeptanz der durch die Aktionsauswahlregel durchgeführten Regelung bzw. Steuerung des technischen Systems. Ferner wird weiterhin sichergestellt, dass die Aktionsauswahlregel trotz ihrer geringen Komplexität sehr gut zur Steuerung bzw. Regelung des technischen Systems geeignet ist.

Literaturverzeichnis:

[1] L. Busoniu, D. Ernst, B. De Schutter, R. Babuska, "Approximate Reinforcement Learning: An Overview", Adaptive Dynamic Programming And Reinforcement Learning, IEEE Conference Proceedings, 2011

[2] S. Silva, M. Castelli, L. Vanneschi, "Measuring Bloat, Overfitting and Functional Complexity in Genetic Programming", Proceedings of the 12th annual conference on Genetic and evolutionary computation, Seiten 877-884, ACM New York, NY, 2010

**Patentansprüche**

1. Verfahren zur rechnergestützten Steuerung und/oder Regelung eines technischen Systems, bei dem:

   a) das dynamische Verhalten des technischen Systems für mehrere Zeitpunkte jeweils durch einen Zustand (x) des technischen Systems und eine am technischen System ausgeführte Aktion (a) charakterisiert wird, wobei eine jeweilige Aktion (a) zu einem jeweiligen Zeitpunkt in einen neuen Zustand (x') des technischen Systems zum nächsten Zeitpunkt führt;
   b) Aktionsauswahlregeln (PO) bereitgestellt und/oder erzeugt werden, wobei eine jeweilige Aktionsauswahlregel (PO) eine zu einem entsprechenden Zeitpunkt am technischen System auszuführende Aktion (a) in Abhängigkeit von zumindest dem Zustand des technischen Systems zum entsprechenden Zeitpunkt angibt und wobei jeder Aktionsauswahlregel (PO) ein Komplexitätsmaß (CM) zugeordnet ist, das eine Komplexität der jeweiligen Aktionsauswahlregel (PO) beschreibt, welche kleiner oder kleiner gleich einer vorbestimmten Komplexitätsschwelle (CT) ist;

c) aus den bereitgestellten und/oder erzeugten Aktionsauswahlregeln (PO) mittels der Berechnung von Bewertungsmaßen (EM), welche jeweils die Eignung einer Aktionsauswahlregel (PO) zur Regelung und/oder Steuerung des technischen Systems beschreiben, die Aktionsauswahlregel (PO') mit dem höchsten Bewertungsmaß (EM) der bereitgestellten und/oder erzeugten Aktionsauswahlregeln (PO) ermittelt wird, wobei ein höheres Bewertungsmaß (EM) eine bessere Eignung der Aktionsauswahlregel (PO) zur Regelung und/oder Steuerung des technischen Systems beschreibt und wobei das Bewertungsmaß (EM) einer jeweiligen Aktionsauswahlregel (PO) abhängt von

- einem Distanzmaß zwischen der jeweiligen Aktionsauswahlregel (PO) und einer vorgegebenen optimalen Aktionsauswahlregel, wobei abnehmende Distanzmaße höhere Bewertungsmaße (EM) repräsentieren; und/oder

- einem Belohnungsmaß, welches sich bei der Ausführung der jeweiligen Aktionsauswahlregel (PO) in einer Simulation des technischen Systems ergibt, wobei höhere Belohnungsmaße zu höheren Bewertungsmaßen führen; und/oder

- einem Gütemaß für die jeweilige Aktionsauswahlregel (PO), welches mittels einer Aktionsauswahlregel-Evaluations-Methode bestimmt wird, wobei höhere Gütemaße zu höheren Bewertungsmaßen (EM) führen;

d) das technische System basierend auf der in Schritt c) ermittelten Aktionsauswahlregel (PO') geregelt und/oder gesteuert wird.

2. Verfahren nach Anspruch 1, bei dem die bereitgestellten und/oder erzeugten Aktionsauswahlregeln (PO) durch einen funktionalen Zusammenhang repräsentiert werden, der basierend auf zumindest dem Zustand des technischen Systems zum jeweiligen Zeitpunkt die zum jeweiligen Zeitpunkt auszuführende Aktion (a) liefert.

3. Verfahren nach Anspruch 2, bei dem das Komplexitätsmaß (CM) durch eine Beschreibungslänge des funktionalen Zusammenhangs repräsentiert wird, wobei die Komplexität gemäß dem Komplexitätsmaß umso geringer ist, je geringer die Beschreibungslänge ist, wobei die Beschreibungslänge die Länge einer binären oder ASCII-Repräsentation des funktionalen Zusammenhangs und/oder die Anzahl an Knoten in dem durch den funktionalen Zusammenhang repräsentierten Parsebaum und/oder die Anzahl von einstellbaren Parametern des funktionalen Zusammenhangs umfasst, wobei die Komplexität gemäß dem Komplexitätsmaß (CM) umso geringer ist, je geringer die Länge der binären oder ASCII-Repräsentation des funktionalen Zusammenhangs ist bzw. je geringer die Anzahl der Knoten im Parsebaum ist bzw. je geringer die Anzahl der einstellbaren Parameter ist.

4. Verfahren nach einem der vorhergehenden Ansprüche, bei dem die in Schritt b) bereitgestellten Aktionsauswahlregeln auf Expertenwissen beruhen.

5. Verfahren nach einem der vorhergehenden Ansprüche, bei dem die Schritte b) und c) mittels genetischer Programmierung und/oder basierend auf einer Particle-Swarm-Optimierung durchgeführt werden.

6. Verfahren nach einem der vorhergehenden Ansprüche, bei dem die Erzeugung der Aktionsauswahlregeln (PO) in Schritt b) derart erfolgt, dass die Aktionsauswahlregeln (PO) aus einer vorbestimmten optimalen Aktionsauswahlregel abgeleitet werden.

7. Verfahren nach Anspruch 6, bei dem das Ableiten der Aktionsauswahlregeln (PO) durch eine Approximation der vorbestimmten optimalen Aktionsauswahlregel mittels eines funktionalen Zusammenhangs erfolgt, der ein Komplexitätsmaß (CM) mit einer Komplexität repräsentiert, die kleiner oder kleiner gleich der vorbestimmten Komplexitätsschwelle (CT) ist.

8. Verfahren nach einem der vorhergehenden Ansprüche, bei dem das Distanzmaß in Schritt c) derart bestimmt wird, dass aus der vorgegebenen optimalen Aktionsauswahlregel eine oder mehrere Aktionen (a) und aus der jeweiligen Aktionsauswahlregel eine oder mehrere Aktionen (a) generiert werden und die Abweichung zwischen der oder den Aktionen, die aus der optimalen Aktionsauswahlregel generiert sind, und der oder den Aktionen (a), die aus der jeweiligen Aktionsauswahlregel (PO) generiert sind, bestimmt wird, wobei eine größere Abweichung ein größeres Distanzmaß repräsentiert.

9. Verfahren nach einem der vorhergehenden Ansprüche, bei dem die Simulation des technischen Systems in Schritt c) auf einem neuronalen Netz basiert.

10. Verfahren nach einem der vorhergehenden Ansprüche, bei dem als Aktionsauswahlregel-Evaluations-Verfahren eine "Fitted Policy Evaluation Method" verwendet wird.

11. Verfahren nach einem der vorhergehenden Ansprüche, bei dem das technische System eine Gasturbine und/oder Windturbine ist.

12. Verfahren nach Anspruch 11, bei dem das technische System eine Gasturbine ist und die Zustände (x) der Gasturbine eine oder mehrere der folgenden Größen umfassen:

- die Temperatur und/oder den Druck an einer oder mehreren Stellen an der Gasturbine, insbesondere die Umgebungstemperatur und/oder den Umgebungsdruck und/oder die Kompressortemperatur und/oder den Kompressordruck und/oder die Temperatur in der Brennkammer und/oder den Druck in der Brennkammer;
- die Luftfeuchtigkeit an einer oder mehreren Stellen an der Gasturbine;
- Brennkammerbeschleunigungen in der Gasturbine;
- die Schadstoffemission der Gasturbine, insbesondere die Stickoxid-Emission;
- die durch die Gasturbine erzeugte Leistung.

13. Verfahren nach Anspruch 11 oder 12, bei dem das technische System eine Gasturbine ist und die an der Gasturbine auszuführenden Aktionen (a) eine Veränderung der Einstellung von einem oder mehreren Kraftstoff-Einspritzventilen und/oder eine Veränderung der Position von einer oder mehreren Schaufeln in der Gasturbine umfassen.

14. Verfahren nach Anspruch 11, bei dem das technische System eine Windturbine ist und die Zustände (x) der Windturbine eine oder mehrere der folgenden Größen umfassen:

- die Temperatur und/oder den Druck und/oder die Luftfeuchtigkeit an einer oder mehreren Stellen an der Windturbine, insbesondere die Umgebungstemperatur und/oder den Umgebungsdruck und/oder die Umgebungsluftfeuchtigkeit;
- die Windstärke an der Windturbine;
- die durch die Windturbine erzeugte Leistung.

15. Verfahren nach einem der Ansprüche 11 oder 14, bei dem das technische System eine Windturbine ist und die an der Windturbine auszuführenden Aktionen (a) eine Veränderung der Anstellwinkel der Rotorblätter des Rotors der Windturbine und/oder eine Veränderung der Ausrichtung des Rotors der Windturbine zum Wind umfassen.

16. Computerprogrammprodukt mit einem auf einem maschinenlesbaren Träger gespeicherten Programm zur Durchführung eines Verfahrens nach einem der vorhergehenden Ansprüche, wenn das Programm auf einem Rechner abläuft.

**Claims**

1. Method for the computerized control and/or regulation of a technical system, in which:

a) the dynamic behavior of the technical system is characterized for multiple points in time in each case by a state (x) of the technical system and an action (a) executed on the technical system, wherein a respective action (a) at a respective point in time results in a new state (x') of the technical system at the next point in time;
b) action selection policies (PO) are provided and/or generated, wherein a respective action selection policy (PO) specifies an action (a), to be executed at a corresponding point in time on the technical system, in dependence on at least the state of the technical system at the corresponding point in time, and wherein each action selection policy (PO) is associated with a complexity measure (CM), which describes a complexity of the respective action selection policy (PO), which is less than or equal to a predetermined complexity threshold (CT);
c) the action selection policy (PO') having the highest evaluation measure (EM) of the provided and/or generated action selection policies (PO) is ascertained from the provided and/or generated action selection policies (PO) by means of the calculation of evaluation measures (EM), which each describe the suitability of an action selection policy (PO) for the regulation and/or control of the technical system, wherein a higher evaluation measure (EM) describes a better suitability of the action selection policy (PO) for the regulation and/or control of the technical system, and wherein the evaluation measure (EM) of a respective action selection policy (PO) is dependent on

- a distance measure between the respective action selection policy (PO) and a predefined optimum action selection policy, wherein decreasing distance measures represent higher evaluation measures (EM); and/or
- a reward measure, which results upon the execution of the respective action selection policy (PO) in a simulation of the technical system, wherein higher reward measures result in higher evaluation measures; and/or
- a quality measure for the respective action selection policy (PO), which is determined by means of an action selection policy evaluation method, wherein higher quality measures result in higher evaluation measures (EM) ;

d) the technical system is regulated and/or controlled based on the action selection policy (PO') ascertained in step c) .

2. Method according to Claim 1, in which the provided and/or generated action selection policies (PO) are represented by a functional relationship, which supplies the action (a) to be executed at the respective point in time based on at least the state of the technical system at the respective point in time.

3. Method according to Claim 2, in which the complexity measure (CM) is represented by a description length of the functional relationship, wherein the complexity according to the complexity measure is less the shorter the description length is, wherein the description length comprises the length of a binary or ASCII representation of the functional relationship and/or the number of nodes in the parsing tree represented by the functional relationship and/or the number of settable parameters of the functional relationship, wherein the complexity according to the complexity measure (CM) is less the shorter the length of the binary or ASCII representation of the functional relationship is or the smaller the number of nodes in the parsing tree is or the smaller the number of the settable parameters is.

4. Method according to any one of the preceding claims, in which the action selection policies provided in step b) are based on expert knowledge.

5. Method according to any one of the preceding claims, in which steps b) and c) are carried out by means of genetic programming and/or based on particle swarm optimization.

6. Method according to any one of the preceding claims, in which the generation of the action selection policies (PO) in step b) is performed such that the action selection policies (PO) are derived from a predetermined optimum action selection policy.

7. Method according to Claim 6, in which the derivation of the action selection policies (PO) is performed by an approximation of the predetermined optimum action selection policy by means of a functional relationship, which represents a complexity measure (CM) having a complexity which is less than or equal to the predetermined complexity threshold (CT).

8. Method according to any one of the preceding claims, in which the distance measure in step c) is determined such that one or more actions (a) are generated from the predefined optimum action selection policy and one or more actions (a) are generated from the respective action selection policy and the deviation between the action or actions which are generated from the optimum action selection policy and the action or actions (a) which are generated from the respective action selection policy (PO) is determined, wherein a greater deviation represents a greater distance measure.

9. Method according to any one of the preceding claims, in which the simulation of the technical system in step c) is based on a neuronal network.

10. Method according to any one of the preceding claims, in which a "fitted policy evaluation method" is used as the action selection policy evaluation method.

11. Method according to any one of the preceding claims, in which the technical system is a gas turbine and/or wind turbine.

12. Method according to Claim 11, in which the technical system is a gas turbine and the states (x) of the gas turbine comprise one or more of the following variables:

- the temperature and/or the pressure at one or more points on the gas turbine, in particular the ambient temperature and/or the ambient pressure and/or the compressor temperature and/or the compressor pressure and/or the temperature in the combustion chamber and/or the pressure in the combustion chamber;
- the air humidity at one or more points on the gas turbine;
- combustion chamber accelerations in the gas turbine;
- the pollutant emission of the gas turbine, in particular the nitrogen oxide emission;
- the power generated by the gas turbine.

13. Method according to Claim 11 or 12, in which the technical system is a gas turbine and the actions (a) to be executed on the gas turbine comprise a change of the setting of one or more fuel injection valves and/or a change of the position of one or more blades in the gas turbine.

14. Method according to Claim 11, in which the technical system is a wind turbine and the states (x) of the wind turbine comprise one or more of the following variables:

- the temperature and/or the pressure and/or the air humidity at one or more points on the wind turbine, in particular the ambient temperature and/or the ambient pressure and/or the ambient air humidity;
- the wind strength at the wind turbine;
- the power generated by the wind turbine.

15. Method according to either of Claims 11 and 14, in which the technical system is a wind turbine and the actions (a) to be executed on the wind turbine comprise a change of the attack angle of the rotor blades of the rotor of the wind turbine and/or a change of the alignment of the rotor of the wind turbine in relation to the wind.

16. Computer program product having a program, which is stored on a machine-readable carrier, for carrying out a method according to any one of the preceding claims when the program runs on a computer.

**Revendications**

1. Procédé de commande et/ou de régulation assistée par ordinateur, d'un système technique, dans lequel :

a) le comportement dynamique du système technique pour plusieurs moments est caractérisé respectivement par un état (x) du système technique et une action (a) exécutée sur le système technique, dans lequel une action (a) respective à un moment respectif dans un nouvel état (x') du système technique conduit au moment suivant ;

b) des règles de sélection d'action (PO) sont fournies et/ou produites, dans lequel une règle de sélection d'action (PO) respective indique une action (a) à exécuter sur le système technique à un moment correspondant en fonction d'au moins l'état du système technique au moment correspondant, et dans lequel à chaque règle de sélection d'action (PO) correspond une mesure de complexité (CM) qui décrit une complexité de la règle de sélection d'action (PO) respective qui est inférieure ou inférieure ou égale à un seuil de complexité (CT) prédéterminé ;

c) à partir des règles de sélection d'action (PO) fournies et/ou produites, au moyen du calcul de mesures d'évaluation (EM) qui décrivent respectivement l'adéquation d'une règle de sélection d'action (PO) à la régulation et/ou la commande du système technique, la règle de sélection d'action (PO') avec la mesure d'évaluation (EM) la plus élevée des règles de sélection d'action (PO) fournies et/ou produites est calculée, dans lequel une mesure d'évaluation (EM) élevée décrit une meilleure adéquation des règles de sélection d'action (PO) à la régulation et/ou la commande du système technique, et dans lequel la mesure d'évaluation (EM) d'une règle de sélection d'action (PO) respective dépend

- d'une mesure de distance entre la règle de sélection d'action (PO) respective et une règle de sélection d'action optimale prédéfinie, dans lequel des mesures de distance en diminution représentent des mesures d'évaluation (EM) plus élevées ; et/ou
- une mesure de récompense qui se produit dans une simulation du système technique lors de l'exécution de la règle de sélection d'action (PO), dans lequel des mesures de récompense plus élevées conduisent à des mesures d'évaluation plus élevées ;
et/ou
- une mesure de qualité pour la règle de sélection d'action (PO) respective, qui est déterminée au moyen d'une méthode d'évaluation de règle de sélection d'action, dans lequel des mesures de qualité plus élevées conduisent à des mesures d'évaluation (EM) plus élevées ;

d) le système technique basé sur la règle de sélection d'action (PO') calculée à l'étape c) est régulé et/ou commandé.

2. Procédé selon la revendication 1, dans lequel les règles de sélection d'action (PO) fournies et/ou produites sont représentées par un lien fonctionnel qui, en se basant sur au moins l'état du système technique au moment respectif, fournit l'action (a) à exécuter au moment respectif.

3. Procédé selon la revendication 2, dans lequel la mesure de complexité (CM) est représentée par une longueur de description du lien fonctionnel, dans lequel la complexité selon la mesure de la complexité est d'autant plus réduite que la longueur de description est plus réduite, dans lequel la longueur de description comprend la longueur d'une représentation binaire ou ASCII du lien fonctionnel et/ou le nombre de noeuds dans l'arbre de parsage représenté par le lien fonctionnel et/ou le nombre de paramètres pouvant être réglés du lien fonctionnel, dans lequel la complexité selon la mesure de complexité (CM) est d'autant plus réduite que la longueur de la représentation binaire ou ASCII du lien fonctionnel est plus réduite, respectivement plus le nombre de noeuds dans l'arbre de parsage est réduit, respectivement plus le nombre des paramètres pouvant être réglés est réduit.

4. Procédé selon l'une des revendications précédentes, dans lequel les règles de sélection d'action fournies à l'étape b) reposent sur l'expertise.

5. Procédé selon l'une des revendications précédentes, dans lequel les étapes b) et c) sont exécutées au moyen de programmation génétique et/ou en se basant sur une optimisation par essaim particulaire.

6. Procédé selon l'une des revendications précédentes, dans lequel la production des règles de sélection d'action (PO) à l'étape b) s'effectue de façon à ce que les règles de sélection d'action (PO) soient dérivées d'une règle de sélection d'action (PO) optimale prédéterminée.

7. Procédé selon la revendication 6, dans lequel la dérivation des règles de sélection d'action (PO) est effectuée par une approximation de la règle de sélection d'action (PO) optimale prédéterminée au moyen d'un lien fonctionnel qui représente une mesure de complexité (CM) avec une complexité qui est inférieure ou inférieure ou égale à un seuil de complexité (CT) prédéterminé.

8. Procédé selon l'une des revendications précédentes, dans lequel la mesure de distance à l'étape c) est déterminée de telle façon que sont générées à partir de la règle de sélection d'action optimale prédéfinie, une ou plusieurs action (s) (a), et à partir de la règle de sélection d'action respective, une ou plusieurs action(s) (a), et l'écart est déterminé entre la ou les action(s) qui sont générées à partir de la règle de sélection d'action optimale et la ou les action (s) (a) qui sont générées à partir de la règle de sélection d'action (PO) respective, dans lequel un écart plus grand représente une mesure de distance plus grande.

9. Procédé selon l'une des revendications précédentes, dans lequel la simulation du système technique à l'étape c) est basée sur un réseau neuronal.

10. Procédé selon l'une des revendications précédentes, dans lequel une « Fitted Policy Evaluation Method » est employée en tant que procédé d'évaluation de règle de sélection d'action.

11. Procédé selon l'une des revendications précédentes, dans lequel le système technique est une turbine à gaz et/ou une éolienne.

12. Procédé selon la revendication 11, dans lequel le système technique est une turbine à gaz et les états (x) de la turbine à gaz comprennent une ou plusieurs des grandeurs suivantes :

- la température et/ou la pression en un ou plusieurs point(s) sur la turbine à gaz, en particulier la température environnante et/ou la pression environnante et/ou la température du compresseur et/ou la pression du compresseur et/ou la température dans la chambre de combustion et/ou la pression dans la chambre de combustion ;
- l'humidité de l'air en un ou plusieurs point (s) sur la turbine à gaz ;
- les accélérations de chambre de combustion dans la turbine à gaz ;
- les émissions de substances toxiques de la turbine à gaz, en particulier l'émission d'oxyde d'azote ;
- la puissance produite par la turbine à gaz.

13. Procédé selon la revendication 11 ou 12, dans lequel le système technique est une turbine à gaz et les actions (a) à exécuter sur la turbine à gaz comprennent une modification de réglage d'une ou plusieurs soupape(s) d'injection de carburant et/ou une modification de la position d'une ou plusieurs aube(s) dans la turbine à gaz.

14. Procédé selon la revendication 11, dans lequel le système technique est une éolienne et les états (x) de l'éolienne comprennent une ou plusieurs des grandeurs suivantes :

- la température et/ou la pression et/ou l'humidité de l'air en un ou plusieurs point (s) sur l'éolienne, en particulier la température environnante et/ou la pression environnante et/ou l'humidité de l'air environnant ;
- la force du vent sur l'éolienne ;
- la puissance produite par l'éolienne.

15. Procédé selon l'une des revendications 11 ou 14, dans lequel le système technique est une éolienne et les actions (a) à exécuter sur l'éolienne comprennent une modification de l'angle d'incidence des pales du rotor de l'éolienne et/ou une modification de l'alignement du rotor de l'éolienne par rapport au vent.

16. Produit de programme informatique comprenant un programme enregistré sur un support lisible par machine pour exécuter un procédé selon l'une des revendications précédentes lorsque le programme est exécuté sur un ordinateur.

| | |
|---|---|
| x, a, x' | S |
| PO, CM, CT | S1 |
| PO, CM, CT, EM | S2 |
| PO' | S3 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009099985 A1

- DE 102007042440 B3

**In der Beschreibung aufgeführte Nicht-Patentliteratur**

- Approximate Reinforcement Learning: An Overview, Adaptive Dynamic Programming and Reinforcement Learning (ADPRL). **BUSONIU, L. et al.** 2011 IEEE Symposium On. IEEE, 11. April 2011, 1-8
- Approximate Reinforcement Learning: An Overview. **L. BUSONIU ; D. ERNST ; B. DE SCHUTTER ; R. BABUŠKA.** Adaptive Dynamic Programming And Reinforcement Learning. IEEE Conference Proceedings, 2011

- Measuring Bloat, Overfitting and Functional Complexity in Genetic Programming. **S. SILVA ; M. CASTELLI ; L. VANNESCHI.** Proceedings of the 12th annual conference on Genetic and evolutionary computation. ACM, 2010, 877-884